# EUROPEAN PATENT APPLICATION

(11) **EP 4 552 746 A2**
(43) Date of publication of application: **14.05.2025**
(21) Application number: 24212054.1
(22) Date of filing: 11.11.2024
(51) Int. Cl.: B04B 3/00

(54) **CENTRIFUGE ROTOR SELF-BALANCING APPARATUS**

(30) Priority: 13.11.2023 US 202318388957
(71) Applicant: Andritz Separation Inc., Arlington, TX 76001 (US)
(72) Inventor: ACHORD, Jason, Arlington, 76001 (US)
(74) Representative: Viering, Jentschura & Partner mbB Patent- und Rechtsanwälte

(57) **Abstract**

A self-balancing mechanism for a centrifuge for the papermaking industry includes: a flange; a torus coupled to the flange; and a set of free bodies disposed within the torus. In response to a slurry being introduced into a perforated cylinder of a rotor of the centrifuge, each free body of the set of free bodies is configured to move within the torus in response to a rotational unbalance of the rotor to which the self-balancing mechanism is coupled caused by introducing the slurry.

## Description

### BACKGROUND

Unless otherwise indicated herein, the materials described in this section are not prior art to the claims in this application and are not admitted to being prior art by inclusion in this section.

In industries such as papermaking, chemical, pharmaceutical, and food processing, centrifuges aid in the separation and purification of various components within a slurry. The centrifuges can be utilized in the slurry dewatering phase, where raw materials like wood chips, recycled paper fibers, crystals, or powders are processed into a slurry, which is a mixture of solids, liquid, and additives. The primary function of the centrifuge is to separate liquid from the solids in the suspension, thereby concentrating the solids. By subjecting the slurry to high rotational speeds, centrifugal forces are generated, causing the solids to migrate towards and collect on the wall of the centrifuge while the liquid passes through the wall. This separation enables the recovery of a higher concentration of solids that can be subsequently used in industrial processes, reducing the overall water content and energy required for drying. Additionally, chemicals and additives used in industrial processes may be recovered from the separated solids. By controlling the centrifuge parameters, paper mills, chemical, pharmaceutical, and food processing plants can achieve optimized separation efficiency, leading to higher-quality product, reduced waste generation, and improved overall operational sustainability in the papermaking, chemical, pharmaceutical, and food processing industries.

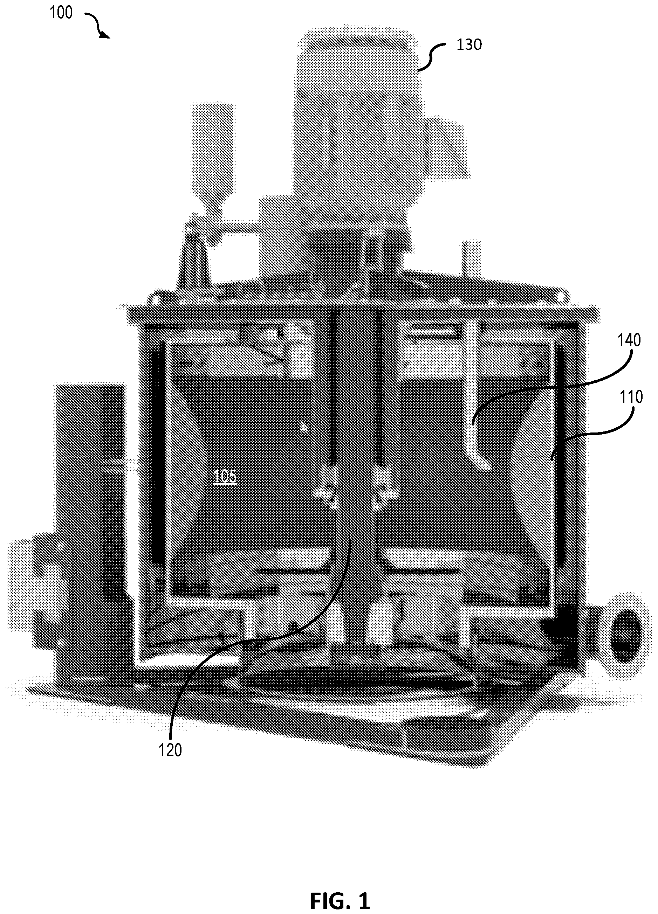

FIG. 1 is a cutaway view of a centrifuge 100. The centrifuge 100 may include a rotor 105 having a basket 110 coupled to a spindle 120. A motor 130 coupled to the spindle 120 causes the rotor 105 to rotate. As the basket 110 rotates, a slurry is fed into the basket 110 through a feed tube 140. Centrifugal force resulting from the rotation of the basket 110 expels the liquid from the slurry leaving a substantially dried cake on the interior of the basket 110 which is subsequently scraped off and collected.

When a centrifuge becomes unbalanced, it disrupts the rotational equilibrium necessary for efficient and safe operation. An unbalanced centrifuge generates uneven centrifugal forces, causing excessive vibration, mechanical stress, and potential damage to or malfunction of the centrifuge.

### SUMMARY

Apparatuses for self-balancing of a centrifuge rotor used in the papermaking, chemical, pharmaceutical, and/or food industries are provided.

According to various aspects there is provided a self-balancing mechanism for a centrifuge for the papermaking industry. In some aspects, the self-balancing mechanism may include: a flange; a torus coupled to the flange; and a set of free bodies disposed within the torus. In response to a slurry being introduced into a perforated cylinder of a rotor of the centrifuge, each free body of the set of free bodies is configured to move within the torus in response to a rotational unbalance of the rotor to which the self-balancing mechanism is coupled caused by introducing the slurry.

According to various aspects there is provided a self-balancing rotor for a centrifuge for the papermaking industry. In some aspects, the self-balancing rotor may include: a perforated cylinder; a spindle coupled to the perforated cylinder; a first cylinder flange coupled to a first end of the perforated cylinder; and a self-balancing mechanism coupled to the first cylinder flange of the perforated cylinder. The self-balancing mechanism may include: a flange; a torus coupled to the flange; and a set of free bodies disposed within the torus. In response to a slurry being introduced into a perforated cylinder of a rotor of the centrifuge, each free body of the set of free bodies is configured to move within the torus in response to a rotational unbalance of the rotor to which the self-balancing mechanism is coupled caused by introducing the slurry.

According to various aspects there is provided a centrifuge. In some aspects, the centrifuge may include: a self-balancing rotor including a perforated cylinder; a spindle coupled to the perforated cylinder; a first cylinder flange coupled to a first end of the perforated cylinder; and a self-balancing mechanism coupled to the first cylinder flange of the perforated cylinder. The self-balancing mechanism may include: a flange; a torus coupled to the flange; and a set of free bodies disposed within the torus. In response to a slurry being introduced into a perforated cylinder of a rotor of the centrifuge, each free body of the set of free bodies is configured to move within the torus in response to a rotational unbalance of the rotor to which the self-balancing mechanism is coupled caused by introducing the slurry.

### BRIEF DESCRIPTION OF THE DRAWINGS

Aspects and features of the various embodiments will be more apparent by describing examples with reference to the accompanying drawings, in which:
FIG. 1 is a cutaway view of a centrifuge;
FIG. 2 is a perspective view of an example of a rotor for a centrifuge for the papermaking industry according to various aspects of the present disclosure;
FIG. 3 is a perspective view of an example of a self-balancing mechanism for a centrifuge for the papermaking industry according to some aspects of the present disclosure;
FIG. 4 is an exploded view of an example of a self-balancing mechanism for a centrifuge for the papermaking industry according to aspects of the present disclosure;
FIG. 5 is an exploded view illustrating an example of coupling a self-balancing mechanism to a rotor of a centrifuge for the papermaking industry according to some aspects of the present disclosure;
FIG. 6 is a perspective view of an example of a self-balancing mechanism coupled to a rotor of a centrifuge for the papermaking industry according to some aspects of the present disclosure;
FIG. 7 is a perspective view of an example of a self-balancing mechanism coupled to a rotor of a centrifuge for the papermaking industry with the second portion of the enclosed channel or torus removed to show the set of free bodies disposed in a balanced arrangement according to some aspects of the present disclosure;
FIG. 8 is a perspective view of an example of a self-balancing mechanism coupled to a rotor of a centrifuge for the papermaking industry with the second portion of the enclosed channel or torus removed to show the set of free bodies disposed in an unbalanced arrangement according to some aspects of the present disclosure;
FIG. 9 is a diagram illustrating an example of an implementation of semiactive control of a self-balancing mechanism using magnets mounted at an exterior portion of an enclosed channel or torus according to some aspects of the present disclosure;
FIG. 10 is a diagram illustrating an example of another implementation of semiactive control of a self-balancing mechanism using magnets mounted at an exterior portion of an enclosed channel or torus according to some aspects of the present disclosure; and
FIGS. 11A and 11B are diagrams illustrating an example of another implementation of semiactive control of a self-balancing mechanism using magnets mounted at an exterior portion of an enclosed channel or torus according to some aspects of the present disclosure.

### DETAILED DESCRIPTION

While certain embodiments are described, these embodiments are presented by way of example only, and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection.

Similar reference characters indicate corresponding parts throughout the several views unless otherwise stated. Although the drawings represent embodiments of various features and components according to the present disclosure, the drawings are not necessarily to scale and certain features may be exaggerated in order to better illustrate embodiments of the present disclosure, and such exemplifications are not to be construed as limiting the scope of the present disclosure.

Except as otherwise expressly stated herein, the following rules of interpretation apply to this specification: (a) all words used herein shall be construed to be of such gender or number (singular or plural) as to circumstances require; (b) the singular terms "a," "an," and "the," as used in the specification and the appended claims include plural references unless the context clearly dictates otherwise; (c) the antecedent term "about" applied to a recited range or value denotes an approximation within the deviation in the range or values known or expected in the art from the measurements; (d) the words "herein," "hereby," "hereto," "hereinbefore," and "hereinafter," and words of similar import, refer to this specification in its entirety and not to any particular paragraph, claim, or other subdivision, unless otherwise specified; (e) descriptive headings are for convenience only and shall not control or affect the meaning or construction of any part of the specification; and (f) "or" and "any" are not exclusive and "include" and "including" are not limiting. Further, the terms, "comprising," "having," "including," and "containing" are to be construed as open-ended terms (i.e., meaning "including but not limited to").

Recitation of ranges of values herein are merely intended to serve as a shorthand method of referring individually to each separate value falling within the range of within any sub ranges there between, unless otherwise clearly indicated herein. Each separate value within a recited range is incorporated into the specification or claims as if each separate value were individually recited herein. Where a specific range of values is provided, it is understood that each intervening value, to the tenth or less of the unit of the lower limit between the upper and lower limit of that range and any other stated or intervening value in that stated range or sub range hereof, is included herein unless the context clearly dictates otherwise. All subranges are also included. The upper and lower limits of these smaller ranges are also included therein, subject to any specifically and expressly excluded limit in the stated range.

Aspects of the present disclosure provide a self-balancing rotor for a centrifuge for the papermaking industry. The self-balancing rotor may include a set of free bodies arranged to move within an enclosed channel or torus (e.g., a hollow circular tube) disposed around the periphery of the rotor as the rotor rotates to counteract unbalance forces caused by a slurry being fed into the rotor. As the rotor rotates, the free bodies, and in some implementations a liquid medium, may migrate within an enclosed channel or torus to the side of the rotor opposite the source of the unbalance.

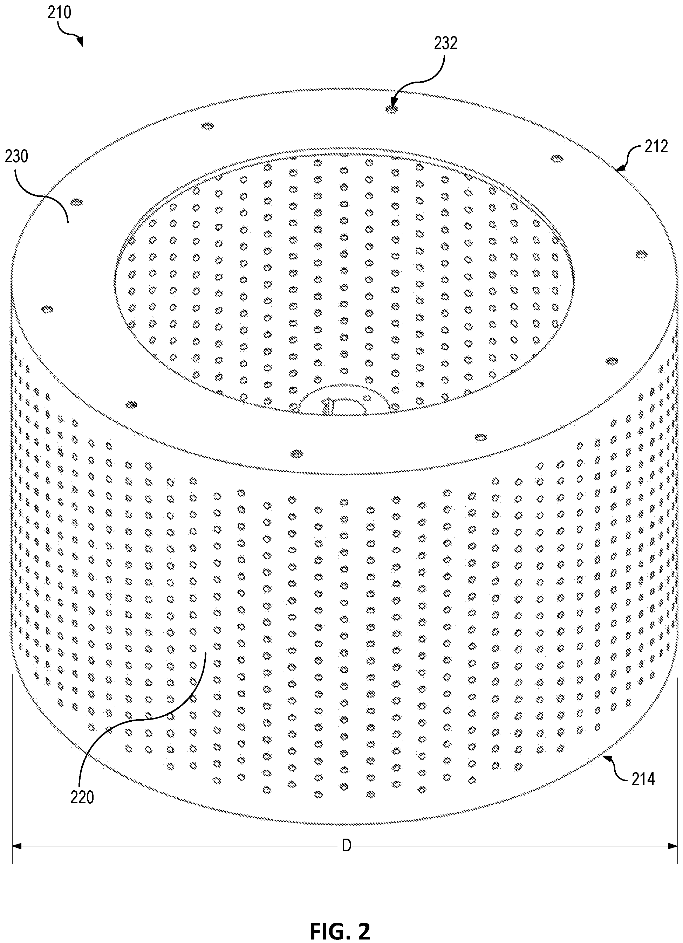

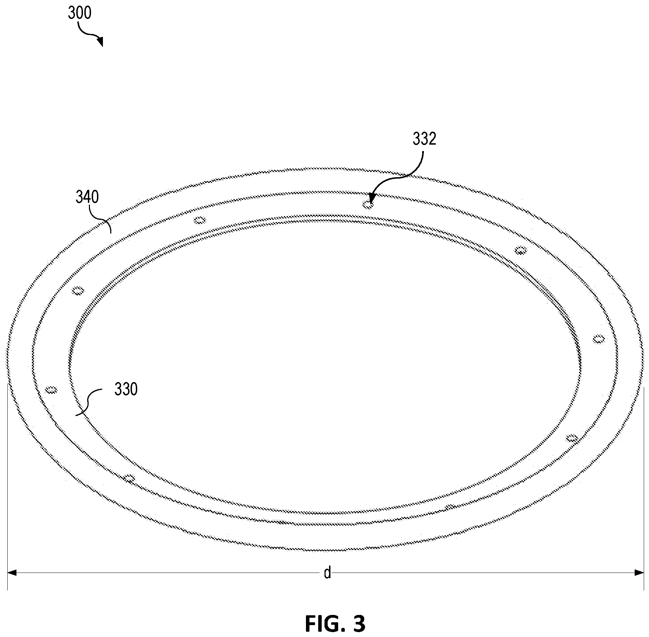

FIG. 2 is a perspective view of an example of a rotor 210 for a centrifuge for the papermaking industry according to some aspects of the present disclosure. The rotor 210 may be a perforated cylinder 220 having a first cylinder flange 230 at a first or top end 212 of the rotor 210 and a second cylinder flange (not shown) at a second or bottom end 214 of the rotor 210. The first cylinder flange 230 may include features 232, for example, holes or other features, configured for coupling a self-balancing mechanism (see FIG. 3) to the rotor 210. The second cylinder flange may include similar features configured for coupling a self-balancing mechanism to the rotor 210. The rotor 210 may have an outer diameter 'D' of approximately 4 feet or another outer diameter.

FIG. 3 is a perspective view of an example of a self-balancing mechanism 300 for a centrifuge for the papermaking industry according to some aspects of the present disclosure. The self-balancing mechanism 300 may include a mounting flange 330 and an enclosed channel or torus 340 disposed around the periphery of the mounting flange 330. The mounting flange 330 and the enclosed channel or torus 340 may be formed in a circular configuration. The enclosed channel or torus 340 may be configured to surround a set of free bodies. The free bodies may be, for example, but not limited to, spheres, ball bearings, rollers, or other bodies, which are able to move within the enclosed channel or torus 340.

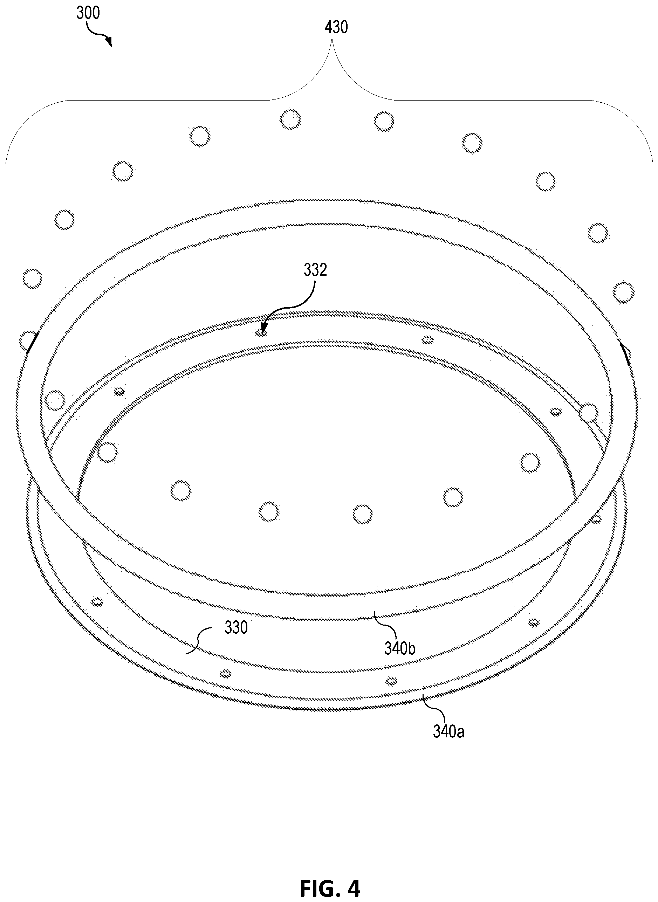

In some implementations, the enclosed channel or torus 340 may also enclose a liquid medium (not shown). The liquid medium may be, for example, but not limited to, oils, water, solvents, esters, magneto-rheological (MR) fluids, or other liquids, which are able to move within the enclosed channel or torus 340. The liquid medium may affect the motion of a set of free bodies (see FIG. 4) enclosed within the enclosed channel or torus 340. The enclosed channel or torus 340 may be circular and may be coupled to the mounting flange 330, for example, by welding or by another means.

The mounting flange 330 may include attaching features 332, for example, holes or other features, configured for coupling the self-balancing mechanism 300 to the first cylinder flange 230 or the second flange of the rotor 210. The self-balancing mechanism 300 may have an outer diameter 'd' equal to, less than, or greater than the outer diameter 'D' of the rotor 210. A set of free bodies (see FIG. 4) may be contained within the enclosed channel or torus 340. The self-balancing mechanism 300 may be scaled to accommodate various models of centrifuges having rotors of various sizes and may be installed on new centrifuges as well as provided as a retrofit for existing centrifuges.

FIG. 4 is an exploded view of an example of a self-balancing mechanism 300 for a centrifuge for the papermaking industry according to some aspects of the present disclosure. FIG. 4 illustrates the mounting flange 330 including a first portion 340a of the enclosed channel or torus 340 separated from a second portion 340b of the enclosed channel or torus 340 to illustrate the set of free bodies 430. When the self-balancing mechanism 300 is assembled, the set of free bodies 430 may be enclosed between the first portion 340a of the enclosed channel or torus 340 and the second portion 340b of the enclosed channel or torus 340.

The set of free bodies 430 may be, for example, but not limited to, spheres, ball bearings, rollers, or other bodies having sufficient mass to offset an unbalance in a rotating rotor 210. The mass of the set of free bodies 430 may be determined as a percentage of the mass of material introduced into the rotor that causes an unbalance. For example, for 1000 kg of material introduced into the rotor, a sufficient mass of the set of free bodies 430 may be 20 kg or 2% of the material mass. The sufficient mass of the set of free bodies 430 may be distributed between the free bodies of the set of free bodies 430 and may vary according to the particular application. The internal dimension of the enclosed channel or torus 340 and the external dimension of each free body in the set of free bodies 430 may be sized to enable the free bodies to move freely within the enclosed channel or torus 340.

The number of free bodies 430 in a set may vary. For example, the self-balancing mechanism 300 may include 16, 20, or another number of free bodies 430 depending on their size and/or mass. The number of free bodies 430 in a set may also vary depending on the diameter of the rotor 210 and the self-balancing mechanism 300. In some implementations, self-balancing mechanism 300 may include a number of free bodies 430 sufficient to fill approximately one quarter of the circumference of the enclosed channel or torus 340.

In some implementations, the second portion 340b of the enclosed channel or torus 340 may be formed as a portion of the mounting flange 330. In such implementations, after the free bodies 430 are placed within the first portion 340a or the second portion 340b, the first portion 340a may be coupled to the second portion 340b, for example, by welding, or another joining process, to form the self-balancing mechanism 300.

In some implementations, the second portion 340b of the enclosed channel or torus 340 may be formed separate from the mounting flange 330. In such implementations, after the free bodies 430 are placed within the first portion 340a or the second portion 340b, the first portion 340a may be coupled to the second portion 340b, for example, by welding, or another joining process, to form the enclosed channel or torus 340. The enclosed channel or torus 340 may be coupled to the mounting flange 330, for example, by welding, or another joining process, to form the self-balancing mechanism 300.

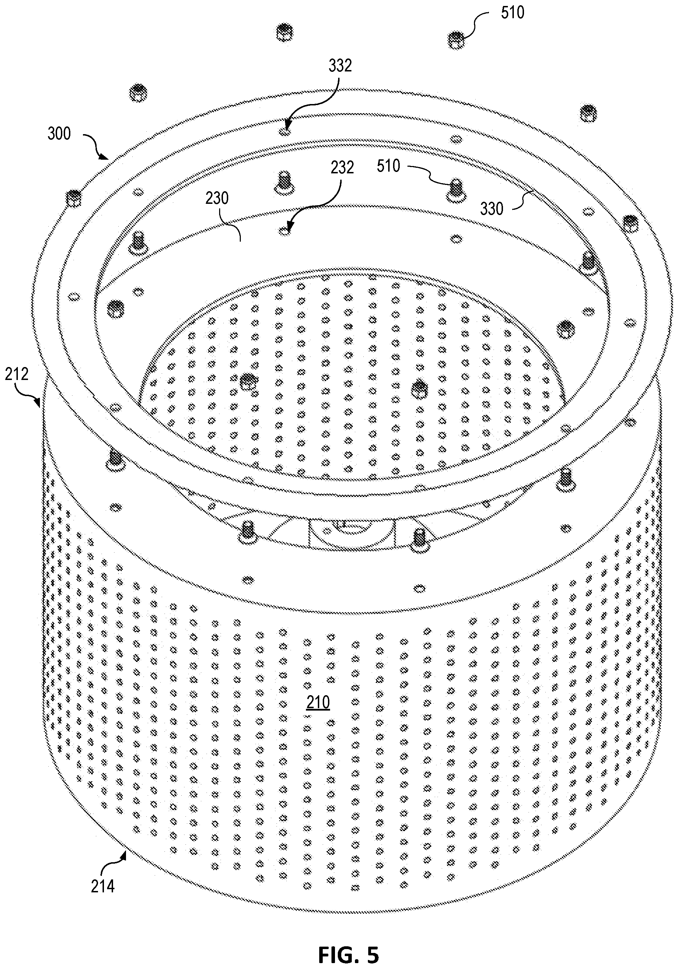

FIG. 5 is an exploded view illustrating an example of coupling a self-balancing mechanism 300 to a rotor 210 of a centrifuge for the papermaking industry according to some aspects of the present disclosure. As illustrated in FIG. 5, the mounting flange 330 of a self-balancing mechanism 300 may be coupled to the first cylinder flange 230 at a first or top end 212 of the rotor 210 using fasteners 510, for example, but not limited to, nuts, bolts, screws, etc., together with the attaching features 332 of the first cylinder flange 230. In some implementations, a self-balancing mechanism 300 may alternatively or additionally be similarly coupled to a second flange (not shown) at a second or bottom end 214 of the rotor 210. In some implementations, the self-balancing mechanism 300 may be coupled to the rotor 210 by welding or another joining process.

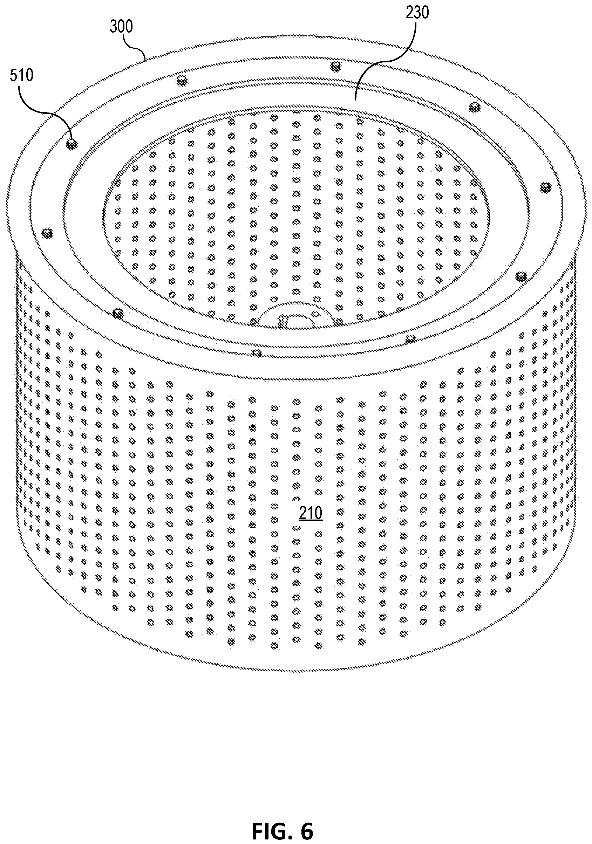

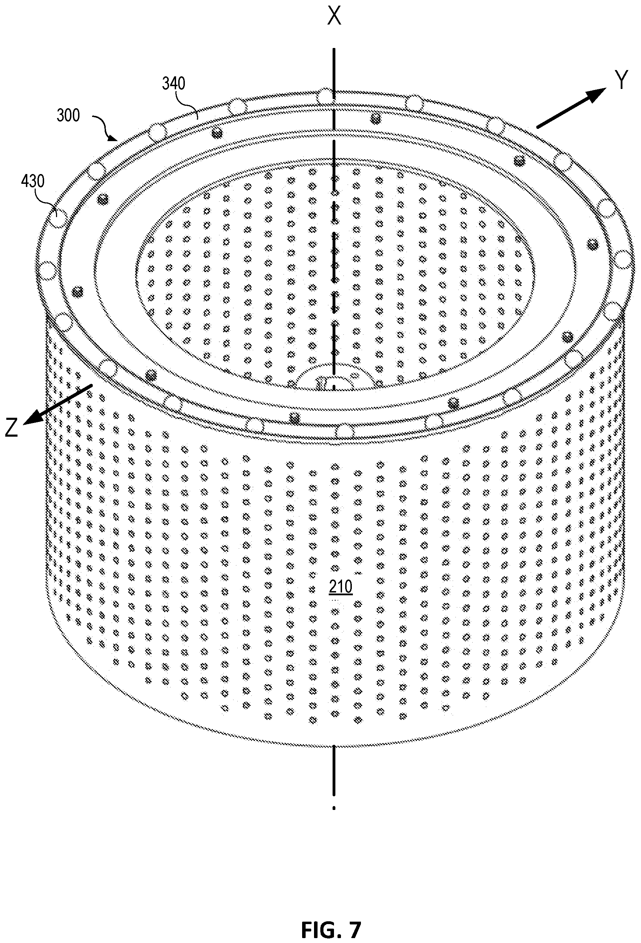

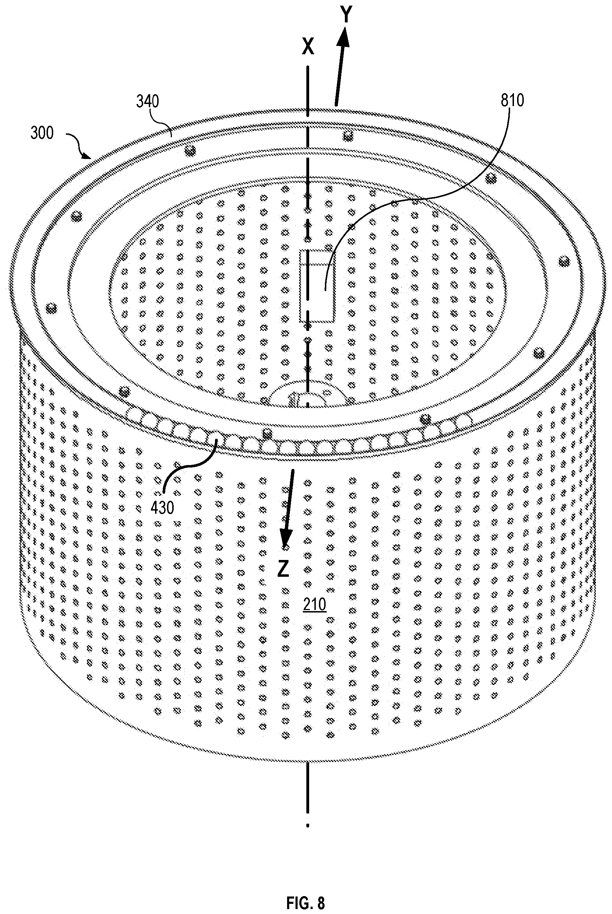

FIG. 6 is a perspective view of an example of a self-balancing mechanism 300 coupled to a rotor 210 of a centrifuge for the papermaking industry according to some aspects of the present disclosure. As shown in FIG. 6, the self-balancing mechanism 300 is coupled to the first cylinder flange 230 of the rotor 210 with fasteners 510. Operation of the self-balancing mechanism 300 will be explained with reference to FIGS. 7 and 8.

FIG. 7 is a perspective view of an example of a self-balancing mechanism 300 coupled to a rotor 210 of a centrifuge for the papermaking industry with the second portion 340b of the enclosed channel or torus 340 removed to show the set of free bodies 430 disposed in a balanced arrangement according to some aspects of the present disclosure. FIG. 7 illustrates the free bodies 430 as spheres, however, the free bodies may be ball bearings, rollers, or other bodies having sufficient mass to offset an unbalance in a rotating rotor. As illustrated in FIG. 7, the rotor 210 and self-balancing mechanism 300 may rotate around an axis of rotation `X.' Centrifugal forces (illustrated as, for example, but not limited to, forces 'Y' and 'Z') may act on the rotor 210 and self-balancing mechanism in directions substantially perpendicular to the axis of rotation `X.' In a balanced condition, the centrifugal forces (e.g., forces 'Y' and 'Z') may be substantially equal and the free bodies 430 may be substantially evenly distributed around the circumference of the self-balancing mechanism 300.

FIG. 8 is a perspective view of an example of a self-balancing mechanism 300 coupled to a rotor 210 of a centrifuge for the papermaking industry with the second portion 340b of the enclosed channel or torus 340 removed to show the set of free bodies 430 disposed in an unbalanced arrangement according to some aspects of the present disclosure. A rotational unbalance of the rotor 210 may occur due to an uneven distribution of mass within the rotor 210, for example, as a slurry is introduced into the rotor 210 or for other reasons. In FIG. 8, a cause of a rotational unbalance is illustrated by the object 810 disposed within the rotor 210.

As the rotor 210 spins, centrifugal force (e.g., forces 'Y' and 'Z') may cause the free bodies 430 enclosed within the enclosed channel or torus 340 to migrate to the side of the rotor 210 opposite the source of the rotational unbalance (e.g., the object 810). The free bodies 430 may remain in position as the rotor 210 is pulled in a direction perpendicular to the axis of rotation X.

For example, a force acting on the rotor 210 in a direction Y perpendicular to the axis of rotation X can cause the free bodies 430 to migrate to an opposite side of self-balancing mechanism 300 mounted on the rotor 210 to exert a force Z to counteract the unbalance. The curvature of the enclosed channel or torus 340 will direct the free bodies away from the source of the unbalance. Once the free bodies 430 compensate for the unbalance they may again remain in their relatively stationary position until acted on by another force.

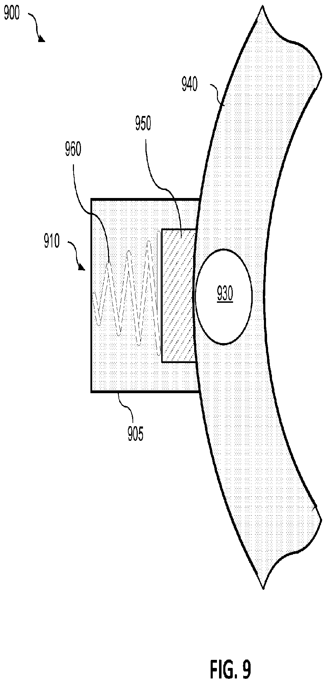

In some implementations, the free bodies may be fabricated from materials having magnetic properties and the enclosed channel or torus may be fabricated from nonmagnetic materials. In some implementations that include a liquid medium, the liquid medium may be a magneto-rheological (MR) fluid having a variable viscosity determined by magnetic interaction. In such implementations, magnetic or electromagnetic force may be implemented to provide semi-active control of the self-balancing mechanism. The self-balancing mechanism may be scaled to accommodate various models of centrifuges having rotors of various sizes and may be installed on new centrifuges as well as provided as a retrofit for existing centrifuges. FIG. 9 is a diagram illustrating an example of an implementation of semiactive control of a self-balancing mechanism 900 using magnets mounted at an exterior portion of an enclosed channel or torus according to some aspects of the present disclosure.

Referring to FIG. 9, a free body 930 may be disposed in an enclosed channel or torus 940. The free body 930 may be sized to move freely within the enclosed channel or torus 940. A magnetic assembly 910 may be disposed on the self-balancing mechanism 900 at an exterior portion on an outer circumference of the enclosed channel or torus 940. The magnetic assembly 910 may include a magnet 950 and a spring 960 having a specified spring constant enclosed within a housing 905. Movement of the free body 930 may be restricted due to magnetic force exerted by the magnet 950 disposed adjacent to a surface of the enclosed channel or torus 940.

The magnet 950 may be positioned adjacent to the surface of the enclosed channel or torus 940 with the spring 960 disposed between the magnet 950 and a wall of the housing 905. As the rotor (e.g., the rotor 210) spins and an unbalance of the rotor becomes more pronounced, at a specified revolutions per minute (RPM), centrifugal force acting on the magnet 950 may cause the magnet 950 to overcome the tension of the spring 960 causing the magnet 950 to move away from the surface of the enclosed channel or torus 940 decreasing the magnetic force exerted on the free body 930 and/or magneto-rheological (MR) fluid thereby permitting the free body 930 and/or magneto-rheological (MR) fluids to move within the enclosed channel or torus 940 to provide a balancing effect on the rotor. A spring constant may be selected to enable the magnet 950 to overcome the spring tension at a specified rotor RPM. A plurality of magnetic assemblies 910 may be equally spaced around the enclosed channel or torus 940.

In some implementations, a magnetic assembly 910 may be provided for each free body 930 within the enclosed channel or torus 940. In some implementations, a magnetic assembly 910 may be provided for less than all over the free bodies 930 within the enclosed channel or torus 940.

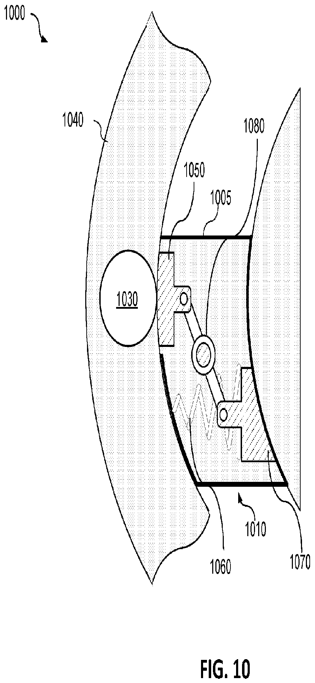

FIG. 10 is a diagram illustrating an example of other implementation of semiactive control of a self-balancing mechanism 1000 using magnets mounted at an exterior portion of an enclosed channel or torus according to some aspects of the present disclosure. Referring to FIG. 10, a free body 1030 may be disposed in an enclosed channel or torus 1040. The free body 1030 may be sized to move freely within the enclosed channel or torus 1040. A magnetic assembly 1010 may be disposed on the self-balancing mechanism 1000 at an exterior portion on an inner circumference of the enclosed channel or torus 1040 adjacent to a surface of the enclosed channel or torus 1040. The magnetic assembly 1010 may include a magnet 1050, a spring 1060, a counterweight 1070, and a lever arm arrangement 1080 configured to connect the counterweight 1070 and the magnet 1050 enclosed within a housing 1005. Movement of the free body 1030 and/or magneto-rheological (MR) fluid may be restricted due to magnetic force exerted by the magnet 1050 disposed adjacent to a surface of the enclosed channel or torus 1040.

The counterweight 1070 may be positioned adjacent to a wall of the housing 1005 with the spring 1060 disposed between the counterweight 1070 and an opposite wall of the housing 1005. The magnet 1050 may be positioned adjacent to the surface of the enclosed channel or torus 1040 through the lever arm arrangement 1080. As the rotor (e.g., the rotor 210) spins and an unbalance of the rotor becomes more pronounced, at a specified revolutions per minute (RPM), centrifugal force acting on the counterweight 1070 may cause the counterweight 1070 to overcome the tension of the spring 1060 causing the counterweight 1070 to move away from the wall of the housing 1005.

The lever arm arrangement 1080 may transfer the movement of the counterweight 1070 to the magnet 1050 causing the magnet 1050 to move away from the surface of the enclosed channel or torus 1040 decreasing the magnetic force exerted on the free body 1030 thereby permitting the free body 1030 and/or magneto-rheological (MR) fluid to move within the enclosed channel or torus 1040 to provide a balancing effect on the rotor. A spring constant may be selected to enable the magnet 1050 to overcome the spring tension at a specified rotor RPM. A plurality of magnetic assemblies 1010 may be equally spaced around the enclosed channel or torus 1040.

In some implementations, a magnetic assembly 1010 may be provided for each free body 1030 within the enclosed channel or torus 1040. In some implementations, a magnetic assembly 1010 may be provided for less than all over the free bodies 1030 within the enclosed channel or torus 1040.

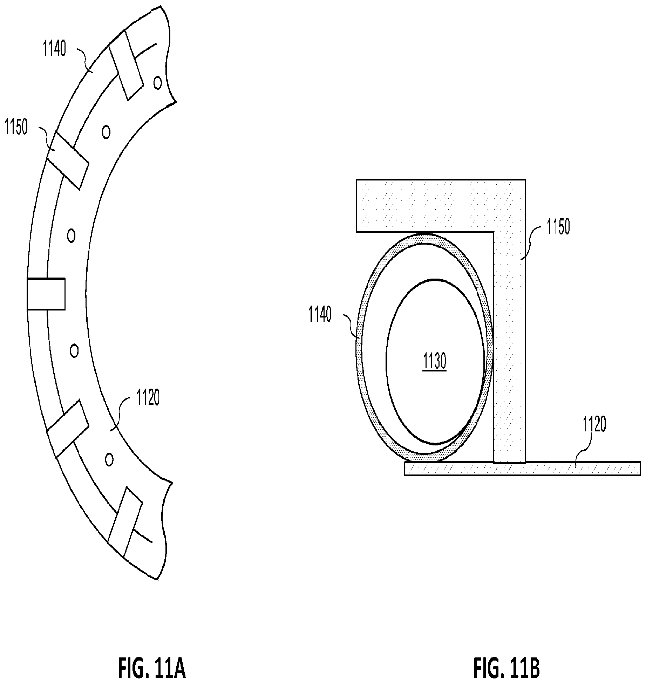

FIGS. 11A and 11B are diagrams illustrating an example of another implementation of semiactive control of a self-balancing mechanism 1100 using magnets mounted at an exterior portion of an enclosed channel or torus according to some aspects of the present disclosure. Referring to FIG. 11A, magnets 1150 may be disposed on the self-balancing mechanism 1100 at an exterior portion on an inner circumference of the enclosed channel or torus 1140. The magnets 1150 may be configured to partially surround the enclosed channel or torus 1140 at each mounting position around the enclosed channel or torus 1140. In some implementations, the magnets 1150 may be configured as horseshoe magnets. The magnets 1150 may be mounted to a flange 1120 of the self-balancing mechanism 1100. Movement of a free body 1130 (see FIG. 11B) and/or magneto-rheological (MR) fluids may be restricted due to magnetic force exerted by the magnet 1150 disposed adjacent to a surface of the enclosed channel or torus 1140. The magnet 1150 may be selected such that at a specified rotor RPM centrifugal force acting on the free body 1130 may overcome the magnetic force of the magnet 1150 thereby permitting the free body 1130 to move within the enclosed channel or torus 1140 to provide a balancing effect on the rotor.

In some implementations, a magnet 1150 may be provided for each free body 1130 within the enclosed channel or torus 1140. In some implementations, a magnet 1150 may be provided for less than all over the free bodies 1130 within the enclosed channel or torus 1140.

In some implementations, the magnet 1150 may be an electromagnet. In such implementations, activation and deactivation of the electromagnet may be controlled by a control system (not shown). The control system may deactivate the electromagnet to permit the free body and/or magneto-rheological (MR) fluids to move within the enclosed channel or torus to provide a balancing effect on the rotor when a specified RPM is reached or when an unbalance of the rotor is detected. Other parameters for controlling the electromagnet may be used without departing from the scope of the present disclosure.

The examples and embodiments described herein are for illustrative purposes only. Various modifications or changes in light thereof will be apparent to persons skilled in the art. These are to be included within the spirit and purview of this application, and the scope of the appended claims, which follow.

For example, further embodiments are as follows:
According to 1st further embodiment, there is provided a self-balancing rotor for a centrifuge for the papermaking industry, the self-balancing rotor comprising: a perforated cylinder; a spindle coupled to the perforated cylinder; a first cylinder flange coupled to a first end of the perforated cylinder; and a self-balancing mechanism coupled to the first cylinder flange of the perforated cylinder, wherein the self-balancing mechanism comprises: a flange; a torus coupled to the flange; and a set of free bodies disposed within the torus; wherein in response to a slurry being introduced into the perforated cylinder of the rotor of the centrifuge, each free body of the set of free bodies is configured to move within the torus in response to a rotational unbalance of the rotor to which the self-balancing mechanism is coupled caused by introducing the slurry.
According to a 2nd further embodiment, there is provided the self-balancing rotor of the 1st further embodiment, wherein the torus of the self-balancing mechanism comprises an internal dimension greater than an external dimension of a free body of the set of free bodies.
According to a 3rd further embodiment, there is provided the self-balancing rotor of the 1st or 2nd further embodiment, wherein an outer diameter of the self-balancing mechanism is equal to or greater than an outer diameter of the perforated cylinder.
According to a 4th further embodiment, there is provided the self-balancing rotor of one of the 1st-3rd further embodiments, wherein the flange comprises mounting features configured for mounting the self-balancing mechanism to the first cylinder flange of the perforated cylinder.
According to a 5th further embodiment, there is provided the self-balancing rotor of one of the 1st-4th further embodiments, wherein the flange of the self-balancing mechanism is welded to first cylinder flange of the perforated cylinder.
According to a 6th further embodiment, there is provided the self-balancing rotor of one of the 1st-5th further embodiments, wherein a portion of the torus is formed as part of the flange.
According to a 7th further embodiment, there is provided the self-balancing rotor of one of 1 st-6th further embodiments, wherein the perforated cylinder comprises a second cylinder flange disposed at a second end of the perforated cylinder, and wherein a second a self-balancing mechanism (as described herein) is coupled to the second cylinder flange of the perforated cylinder.
According to an 8th further embodiment, there is provided the self-balancing rotor of one of the 1st-7th further embodiments, further comprising a magnetic assembly, the magnetic assembly comprising: a magnet configured to provide a magnetic force sufficient to maintain a free body of the set of free bodies within the torus in a position adjacent to the magnet; and a spring configured to position the magnet adjacent to an exterior surface on an outer circumference of the torus, wherein at a specified revolutions per minute (RPM) centrifugal force acting on the magnet overcomes tension on the spring causing the magnet to move away from the exterior surface of the torus decreasing the magnetic force on the free body, and wherein when the magnetic force is decreased, the free body moves within the torus in response to a rotational unbalance of the rotor.
According to a 9th further embodiment, there is provided a centrifuge, comprising: a self-balancing rotor comprising: a perforated cylinder; a spindle coupled to the perforated cylinder; a first cylinder flange coupled to a first end of the perforated cylinder; and a self-balancing mechanism coupled to the first cylinder flange of the perforated cylinder, wherein the self-balancing mechanism comprises: a flange; a torus coupled to the flange; and a set of free bodies disposed within the torus; wherein in response to a slurry being introduced into the perforated cylinder of the rotor of the centrifuge, each free body of the set of free bodies is configured to move within the torus in response to a rotational unbalance of the rotor to which the self-balancing mechanism is coupled caused by introducing the slurry.
According to a 10th further embodiment, there is provided the centrifuge of the 9th further embodiment, wherein the torus of the self-balancing mechanism comprises an internal dimension greater than an external dimension of a free body of the set of free bodies.
According to an 11th further embodiment, there is provided the centrifuge of the 9th or 10th further embodiment, wherein an outer diameter of the self-balancing mechanism is equal to or greater than an outer diameter of the perforated cylinder.
According to a 12th further embodiment, there is provided the centrifuge of one of the 9th to 11th further embodiments, wherein the flange comprises mounting features configured for mounting the self-balancing mechanism to the first cylinder flange of the perforated cylinder.
According to a 13th further embodiment, there is provided the centrifuge of one of the 9th to 12th further embodiments, wherein the flange of the self-balancing mechanism is welded to first cylinder flange of the perforated cylinder.
According to a 14th further embodiment, there is provided the centrifuge of one of the 9th to 13th further embodiments, wherein a portion of the torus is formed as part of the flange.
According to a 15th further embodiment, there is provided the centrifuge of one of the 9th to 14th further embodiments, wherein the perforated cylinder comprises a second cylinder flange disposed at a second end of the perforated cylinder, and wherein a second a self-balancing mechanism (as described herein) is coupled to the second cylinder flange of the perforated cylinder.

## Claims

1. A self-balancing mechanism for a centrifuge for the papermaking industry, the self-balancing mechanism comprising:
a flange;
a torus coupled to the flange; and
a set of free bodies disposed within the torus;
wherein in response to a slurry being introduced into a perforated cylinder of a rotor of the centrifuge, each free body of the set of free bodies is configured to move within the torus in response to a rotational unbalance of the rotor to which the self-balancing mechanism is coupled caused by introducing the slurry.

2. The self-balancing mechanism of claim 1, wherein the torus comprises an internal dimension greater than an external dimension of a free body of the set of free bodies.

3. The self-balancing mechanism of claim 1 or 2, wherein the self-balancing mechanism further comprises a liquid enclosed by the torus, wherein the liquid retards motion of the free bodies of the set of free bodies.

4. The self-balancing mechanism of one of claims 1-3, wherein an outer diameter of the self-balancing mechanism is equal to or greater than an outer diameter of the perforated cylinder of the centrifuge.

5. The self-balancing mechanism of one of claims 1-4, wherein the flange comprises mounting features configured for mounting the self-balancing mechanism to the rotor of the centrifuge.

6. The self-balancing mechanism of one of claims 1-5, wherein the flange of the self-balancing mechanism is welded to a flange of the rotor of the centrifuge.

7. The self-balancing mechanism of one of claims 1-6, wherein a portion of the torus is formed as part of the flange.

8. The self-balancing mechanism of one of claims 1-7, further comprising a magnetic assembly, the magnetic assembly comprising:
a magnet configured provide a magnetic force sufficient to maintain a free body of the set of free bodies within the torus in a position adjacent to the magnet;
a counterweight coupled to the magnet via a lever arm arrangement; and
a spring configured to position the counterweight such that the magnet is positioned via the lever arm arrangement in a position adjacent to an exterior surface on an inner circumference of the torus,
wherein at a specified revolutions per minute (RPM) centrifugal force acting on the counterweight overcomes tension on the spring causing the lever arm arrangement to move the magnet away from the exterior surface of the torus decreasing the magnetic force on the free body, and
wherein when the magnetic force is decreased, the free body moves within the torus in response to a rotational unbalance of the rotor.

9. A self-balancing rotor for a centrifuge for the papermaking industry, the self-balancing rotor comprising:
a perforated cylinder;
a spindle coupled to the perforated cylinder;
a first cylinder flange coupled to a first end of the perforated cylinder; and
a self-balancing mechanism according to one of claims 1-8, which is coupled to the first cylinder flange of the perforated cylinder.

10. The self-balancing rotor of claim 9, wherein the flange comprises mounting features configured for mounting the self-balancing mechanism to the first cylinder flange of the perforated cylinder.

11. The self-balancing rotor of claim 9 or 10, wherein the flange of the self-balancing mechanism is welded to first cylinder flange of the perforated cylinder.

12. The self-balancing rotor of one of claims 9-11, wherein the perforated cylinder comprises a second cylinder flange disposed at a second end of the perforated cylinder, and
wherein a second self-balancing mechanism is coupled to the second cylinder flange of the perforated cylinder.

13. A centrifuge, comprising:
a self-balancing rotor according to one of claims 9-12.
